# EUROPEAN PATENT APPLICATION

(11) **EP 3 909 997 A1**
(43) Date of publication of application: **17.11.2021**
(21) Application number: 19909432.7
(22) Date of filing: 20.12.2019
(51) Int. Cl.: C08G 59/24, C08G 59/62, C08K 7/04, C08L 63/00, C08J 5/18, C09K 5/14, B29C 70/88, C08K 3/28

(54) **RESIN COMPOSITION, METHOD FOR PRODUCING SAID RESIN COMPOSITION, AND THERMALLY CONDUCTIVE SHEET**

(30) Priority: 07.01.2019 JP 2019000777; 07.01.2019 JP 2019000779
(71) Applicant: Nitto Shinko Corporation, Sakai-shi, Fukui 910-0381 (JP)
(72) Inventor: TABUCHI, Akihiro, Sakai-shi, Fukui 910-0381 (JP)
(74) Representative: Stolmár & Partner Patentanwälte PartG mbB
(86) International application number: PCT/JP2019/049974
(87) International publication number: WO 2020/145083

(57) **Abstract**

Provided by the present invention is a resin composition or the like including an epoxy resin, a curing agent, and an inorganic filler, the inorganic filler being dispersed in the epoxy resin, wherein the inorganic filler includes two or more different inorganic particles including a whisker-like filler.

## Description

### CROSS-REFERENCE TO RELATED APPLICATION

This application claims priority to Japanese Patent Application No. 2019-000777 and Japanese Patent Application No. 2019-000779, the disclosures of which are incorporated herein by reference in its entirety.

### FIELD

The present invention relates to a resin composition, a method for producing the resin composition, and a thermal conductive sheet.

### BACKGROUND

Conventionally, a resin composition including an epoxy resin, a curing agent, and an inorganic filler has been used in the electronics field.

Patent Literature 1 below discloses that a cured product obtained by curing a resin composition including an epoxy resin, a curing agent, and an inorganic filler is used as a heat dissipation sheet. Such a heat dissipation sheet includes a relatively large amount of an inorganic filler such as a boron nitride filler and thus has heat dissipation properties.

### CITATION LIST

### Patent Literature

Patent Literature 1: JP 2010-94887 A

### SUMMARY

### Technical Problem

However, although the resin composition disclosed in Patent Literature 1 includes a relatively large amount of an inorganic filler as described above, there is a problem that the heat dissipation properties, when the resin composition has been turned into a cured product, is not necessarily sufficient.

Therefore, an object of the present invention is to provide a resin composition having sufficient heat dissipation properties when it is turned into a cured product, a method for producing the resin composition, and a thermal conductive sheet including a resin layer formed of the resin composition.

### Solution to Problem

The resin composition according to the present invention includes an epoxy resin, a curing agent, and an inorganic filler, the inorganic filler being dispersed in the epoxy resin, wherein the inorganic filler includes two or more different inorganic particles including a whisker-like filler.

The method for producing a resin composition according to the present invention includes a kneading step of kneading a raw material comprising an epoxy resin, a curing agent, and an inorganic filler to prepare a resin composition in which the inorganic filler is dispersed, wherein the epoxy resin includes a liquid epoxy resin which is in a liquid form at normal temperature, and the inorganic filler includes two or more different inorganic particles including a whisker-like filler, the method further including performing, before the kneading step, a pre-kneading step of dispersing the whisker-like filler in the liquid epoxy resin.

The thermal conductive sheet according to the present invention includes an epoxy resin, a curing agent, and an inorganic filler, the inorganic filler being dispersed in the epoxy resin, wherein the inorganic filler includes two or more different inorganic particles including a whisker-like filler.

### BRIEF DESCRIPTION OF DRAWINGS

Fig. 1 is a top view showing a laminated body subjected to etching.
Fig. 2 is a cross sectional view showing an arrangement in measurement of withstand voltage.
Fig. 3 is a SEM sectional photograph of a resin composition including only a boron nitride filler.
Fig. 4 is a SEM sectional photograph of a resin composition including a boron nitride filler and 0.10 volume% of aluminum nitride whisker.

### DESCRIPTION OF EMBODIMENTS

Hereinafter, embodiments of the present invention will be described.

### <First Embodiment>

### (Resin composition)

A resin composition according to this embodiment includes a component that eventually constitutes a cured product. That is, the resin composition according to this embodiment includes a polymerizable component that is turned into a cured resin by polymerization. Also, the resin composition according to this embodiment includes an inorganic filler to cause the cured product to have good thermal conductive properties. The resin composition according to this embodiment may include additives commonly used as a plastic containing chemical in a range so as not to impair the effect of the present invention.

The content ratio of the polymerizable component in the resin composition according to this embodiment is preferably 10 parts by mass or more and 70 parts by mass or less, more preferably 30 parts by mass or more and 40 parts by mass or less.

The cured product obtained by curing the resin composition according to this embodiment preferably includes 10 parts by volume or more and 60 parts by volume or less of the inorganic filler, more preferably includes 30 parts by volume or more and 60 parts by volume or less of the inorganic filler, still more preferably includes 50 parts by volume or more and 60 parts by volume or less of the inorganic filler, when a solid content of the cured product is 100 parts by volume. In view of the fact that the content ratio of the inorganic filler in the cured product tends to fall within the aforementioned range, the resin composition according to this embodiment preferably includes 30 parts by mass or more and 90 parts by mass or less of the inorganic filler, more preferably includes 60 parts by mass or more and 70 parts by mass or less of the inorganic filler, based on 100 parts by mass of the polymerizable component.

Further, the resin composition according to this embodiment preferably includes 0.005 parts by mass or more and 0.05 parts by mass or less of the additives, more preferably includes 0.01 parts by mass or more and 0.03 parts by mass or less of the additives, based on 100 parts by mass of the inorganic filler.

The resin composition according to this embodiment includes, as the polymerizable component, an epoxy resin and a curing agent. In this embodiment, the epoxy resin is cured together with the curing agent to be turned into a cured resin.

In the resin composition according to this embodiment, the epoxy resin includes a diphenyl ether type epoxy resin represented by formula (1) below. The diphenyl ether type epoxy resin represented by formula (1) below is a solid epoxy resin which is in a solid form at normal temperature (for example, 23 °C). Examples of the diphenyl ether type epoxy resin represented by formula (1) below include a diphenyl ether type epoxy resin represented by formula (1') below. The epoxy resin preferably further includes a liquid epoxy resin which is in a liquid form at normal temperature. The epoxy resin enables a later-described whisker-like filler to be sufficiently dispersed in the epoxy resin by the inclusion of the liquid epoxy resin.

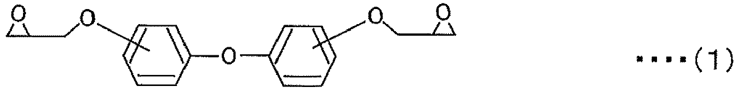

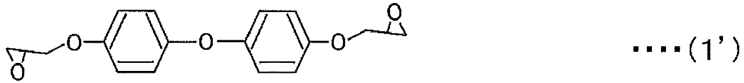

As the liquid epoxy resin, a commercially available bisphenol A type epoxy resin in a liquid form can be used. Examples of the commercially available bisphenol A type epoxy resin in a liquid form include JER (registered trademark) 825, JER (registered trademark) 827, JER (registered trademark) 828, JER (registered trademark) 828EL, JER (registered trademark) 828 US, JER (registered trademark) 828XA, and JER (registered trademark) 824. Among them, JER (registered trademark) 828 is preferable for use.

In the resin composition according to this embodiment, it is preferable that 20 parts by volume or more and 30 parts by volume or less of the liquid epoxy resin be included, it is more preferable that 22 parts by volume or more and 28 parts by volume or more of the liquid epoxy resin be included, it is still more preferable that 24 parts by volume or more and 26 parts by volume or less of the liquid epoxy resin be included, with respect to 1 part by volume of the later-described whisker-like filler.

The curing agent in the resin composition according to this embodiment includes a trisphenol type phenol resin represented by formula (2) below.

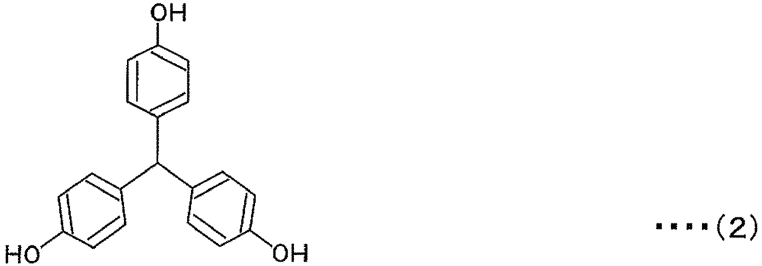

The ratio of the total of the epoxy resin and the curing agent in the polymerizable component is preferably 80 mass% or more and 100 mass% or less, more preferably 90 mass% or more and 100 mass% or less.

The equivalent ratio of the equivalents of the epoxy resin to the equivalents of the curing agent of the epoxy resin is preferably 1/2 or more and 2/1 or less, more preferably 2/3 or more and 3/2 or less.

The inorganic filler includes two or more different inorganic particles including the whisker-like filler. The inorganic filler is dispersed in the epoxy resin. The term "whisker" herein means a needle-like single crystal, and aluminum nitride whisker, alumina whisker, calcium carbonate whisker, calcium metasilicate whisker, or the like can be used as the whisker-like filler.

A whisker-like filler having a D90 of 25 pm or more is preferably used as the whisker-like filler. Use of such a whisker-like filler enables a cured product of the resin composition to have further improved thermal conductivity. That is, it enables the cured product of the resin composition to have further improved heat dissipation properties. The D90 of the whisker-like filler can be measured by a wet method using a laser diffraction and scattering type particle size distribution measuring apparatus (LS 13 320 manufactured by BECKMANCOULTER). The measurement is performed in the following conditions.
- Dispersion media: MEK (methyl ethyl ketone, refractive index: 1.38)
- Measurement sample: Whisker-like filler
- PID (Polarization Intensity Differential Scattering) Concentration: 42%
- Pump speed: 68%
- Relative humidity: 6%
- Run time (Circulation time for dispersion media with the measurement sample dispersed therein): 94 sec.
- Software: Dedicated software ver. 6.03
- Firmware: Dedicated firmware ver. 2.02
- Measurement range: 0.04 to 2000 pm

In the case where the whisker-like filler as the measurement sample is aluminum nitride whisker (AIN whisker), a pretreatment is preferably performed to cause the AIN whisker to be dispersed in the MEK by adding a composition, which is prepared by adding the AIN whisker to a liquid epoxy resin, to the MEK as the dispersion media, followed by subjecting the MEK to ultrasonic treatment for 15 to 20 minutes.

The aforementioned whisker-like filler is a fibrous high thermal conductivity inorganic filler having a relatively high thermal conductivity at 20 °C. The aforementioned whisker-like filler generally has a thickness of 2 to 3 pm and a length of several tens pm to several thousands pm. Among these whisker-like fillers, aluminum nitride whisker having a thermal conductivity (170 W/(mK)) which is particularly high at 20 °C is preferably used.

The whisker-like filler has a relatively high thermal conductivity as aforementioned and has a length as aforementioned. Thus, in the case where the whisker-like filler together with inorganic particles other than the whisker-like filler (hereinafter referred to simply as other inorganic particles) is included in the resin composition according to this embodiment, the whisker-like filler is assumed to fulfill a role to connect the other inorganic particles with each other when the resin composition is turned into a cured product. That is, it is assumed that heat dissipation paths for connecting the other inorganic particles with each other are formed in the cured product of the resin composition and therefore the heat dissipation is enhanced via the heat dissipation paths. Accordingly, it is assumed that the cured product of the resin composition according to this embodiment has an improved heat dissipation properties. The whisker-like filler is preferably held in a dispersed state in order to sufficiently form the heat dissipation paths among the other inorganic particles by the whisker-like filler as described above. On the other hand, the whisker-like filler is generally present in a cotton-like aggregate. Therefore, the whisker-like filler is preferably fractured or loosened, and thereby dispersed in the liquid epoxy resin.

Examples of the other inorganic particles include a boron nitride filler, an aluminum nitride filler, a silicon nitride filler, a gallium nitride filler, an alumina filler, a silicon carbide filler, a silicon dioxide filler, a magnesium oxide filler, and a diamond filler. The other inorganic particles preferably include aggregated particles in which a plurality of primary particles are aggregated. The other inorganic particles can be configured to have a large particle size by the inclusion of the aggregated particles, so that the distance between the other inorganic particles in the epoxy resin can be shortened. This configuration can make it easy to form the dissipation paths among the other inorganic particles by the later-described whisker-like filler, thereby the heat dissipation properties of the cured product of the resin composition can be improved.

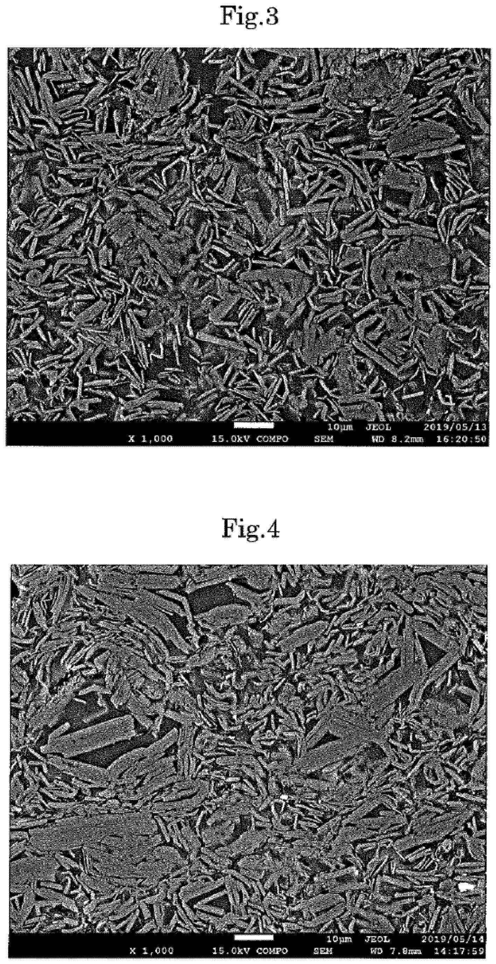

Here, the particles of the boron nitride filler have a plate shape and generally have a relatively small thickness of 2 pm or less even in the other inorganic particles described above. Therefore, the inclusion of only the boron nitride filler in the resin composition causes the particles of the boron nitride fillers to be separated from each other with a relatively wide distance as shown in Fig. 3, and thus, when the resin composition is cured and formed into a sheet body, the sheet body may not be necessarily provided with sufficient heat dissipation paths. However, even in the case where the other inorganic particles are of the boron nitride filler having a relatively small thickness as aforementioned, the inclusion of the whisker-like filler in the resin composition according to this embodiment enables to connect the particles of the boron nitride filler in the thickness direction. Thereby, a plurality of laminated bodies, in which a plurality of particles of the boron nitride filler are laminated in the thickness direction, can be formed in the resin composition according to this embodiment as shown in Fig. 4. Therefore, each distance between the particles of the boron nitride filler is relatively small. As a result, when the resin composition according to this embodiment is cured to form a sheet body, sufficient heat dissipation paths can be formed in the thickness direction of the sheet body.

The content of the whisker-like fiber in the cured product obtained by curing the resin composition according to this embodiment is preferably 0.07 parts by volume or more and 0.50 parts by volume or less, more preferably 0.08 parts by volume or more and 0.40 parts by volume or less, still more preferably 0.08 parts by volume or more and 0.34 parts by volume or less based on the total volume part of the inorganic filler.

Examples of the additives include a curing accelerator for accelerating the curing reaction of the epoxy resin with the curing agent, and also include a dispersant, a tackifier, an aging retardant, an antioxidant, a processing aid, a stabilizer, a defoamer, a flame retarder, a thickener, and a pigment.

Examples of the curing accelerator include tetraphenylphosphonium tetraphenylborate, imidazoles, triphenylphosphate (TPP), and an amine-based curing accelerator. Examples of the amine-based curing accelerator include boron trifluoride monoethylamine.

The content of the curing accelerator in the resin composition according to this embodiment is preferably 0.5 parts by mass or more and 1.5 parts by mass or less, more preferably 0.5 parts by mass or more and 1.0 parts by mass or less based on 100 parts by mass of the total of the epoxy resin and the curing agent.

The resin composition according to this embodiment may be incompletely cured while its curing reaction has progressed to some extent. In other words, the resin composition may be in a state where its curing reaction has progressed in a part thereof. For example, the resin composition in a state of having fluidity may be coated in a sheet shape, and thereafter allowed to be partly cured. Even in the case where the curing reaction has partly progressed, the resin composition according to this embodiment includes the aforementioned epoxy resin, the aforementioned curing agent, and the aforementioned inorganic filler.

### (Method for producing resin composition)

A method for producing the resin composition according to this embodiment includes a kneading step of kneading raw materials including an epoxy resin, a curing agent, and an inorganic filler to prepare a resin composition in which the inorganic filler is dispersed. In the method for producing the resin composition according to this embodiment, the epoxy resin includes a diphenyl ether type epoxy resin represented by formula (1) above and a liquid epoxy resin which is in a liquid form at normal temperature. In the method for producing the resin composition according to this embodiment, the curing agent includes a trisphenol type phenol resin represented by formula (2) above. In the method for producing the resin composition according to this embodiment, the inorganic filler includes two or more different inorganic particles including a whisker-like filler. In the method for producing the resin composition according to this embodiment, a pre-kneading step of dispersing the whisker-like filler in the liquid epoxy resin is performed before the kneading step.

Although the whisker-like filler is generally present in a cotton-like aggregate as described above, the aggregated whisker-like filler can be sufficiently fractured or loosened by performing the pre-kneading step before the kneading step as described above. The kneading step is performed with the thus sufficiently fractured or loosened whisker-like filler in the method for producing the resin composition according to this embodiment, and thus the whisker-like filler can be sufficiently dispersed in the epoxy resin. Thereby, the whisker-like filler can provide sufficient connections between the other inorganic particles dispersed in the epoxy resin, and thus the heat dissipation properties when the resin composition obtained by the aforementioned method is turned into a cured product can be improved.

In the method for producing the resin composition according to this embodiment, the inorganic filler preferably further includes boron nitride particles, and the boron nitride particles preferably include aggregated particles in which a plurality of primary particles are aggregated. Since the pre-kneading step is performed before the kneading step in the method for producing the resin composition according to this embodiment as described above, the kneading step can be performed with the whisker-like filler sufficiently fractured or loosened. Therefore, the boron nitride particles can be sufficiently dispersed in the resin composition without need for excessive kneading in the kneading step. Thereby, even in the case where the aggregated particles of the boron nitride particles are included, the boron nitride particles can be sufficiently dispersed in the epoxy resin while maintaining the aggregation state of the aggregated particles to some extent. As described above, the distance between the boron nitride particles can be shortened by the inclusion of the aggregated particles, and therefore the dissipation paths between the boron nitride particles by the whisker-like filler can be easily formed. As a result, the heat dissipation properties when the resin composition is turned into a cured product can be improved.

### (Thermal conductive sheet)

The thermal conductive sheet according to this embodiment includes a resin layer constituted by the aforementioned resin composition. Therefore, the thermal conductive sheet according to this embodiment has improved heat dissipation properties.

As the material of an adherend for the thermal conductive sheet, metal is preferable. Specifically, metal including copper or aluminum is preferable.

The thermal conductive sheet according to this embodiment can be used for a metal base circuit substrate. The metal base circuit substrate is formed by, for example, adhering a circuit layer to a thermal conductive sheet. The metal base circuit substrate having this configuration includes the thermal conductive sheet according to this embodiment, and thus the metal base circuit substrate also has improved heat dissipation properties.

Further, the thermal conductive sheet according to this embodiment is used for, for example, a power module. The power module is formed by, for example, mounting a heat generating element such as a semiconductor chip or a power IC on a circuit layer of the metal base circuit substrate, temporarily sealing these elements with silicone gel, followed by performing resin molding on the silicone gel. The power module with this configuration includes the thermal conductive sheet according to this embodiment, and thus the power module also has improved heat dissipation properties.

### <Second Embodiment>

### (Resin composition)

In the resin composition according to the second embodiment, the epoxy resin includes a naphthalene diol aralkyl type epoxy resin represented by formula (3) below instead of the diphenyl ether type epoxy resin represented by formula (1) above. The naphthalene diol aralkyl type epoxy resin represented by formula (3) below is a solid epoxy resin which is in a solid form at normal temperature (for example, 23 °C). Therefore, the resin composition according to the second embodiment preferably further includes a liquid epoxy resin, which is in a liquid form at normal temperature, as the epoxy resin similarly to the resin composition according to the first embodiment. As described above, the resin composition, which includes the liquid epoxy resin, enables a whisker-like filler to be sufficiently dispersed in the epoxy resin. The same liquid epoxy resins as those exemplified in the first embodiment can be used.

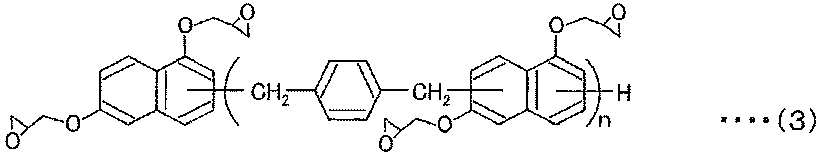

Herein, n denotes a positive integer.

In the resin composition according to the second embodiment, the curing agent includes a naphthalene diol aralkyl type phenol resin represented by formula (4) below instead of the trisphenol type phenol resin represented by formula (2) above.

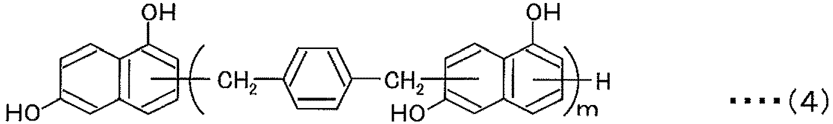

Herein, m denotes a positive integer.

Similarly to the resin composition of the first embodiment, the resin composition according to the second embodiment also has sufficient heat dissipation properties when it is turned into a cured product, even though the naphthalene diol aralkyl type epoxy resin represented by formula (3) above is alternatively used for the solid epoxy resin included in the epoxy resin, and the naphthalene diol aralkyl type phenol resin represented by formula (4) above is alternatively used for the phenol resin included in the curing agent as described above.

### (Method for producing resin composition)

The method for producing the resin composition according to the second embodiment is performed in the same manner as the method for producing the resin composition according to the first embodiment, except that the epoxy resin includes the naphthalene diol aralkyl type epoxy resin represented by formula (3) above instead of the diphenyl ether type epoxy resin represented in formula (1) above, and the curing agent includes the naphthalene diol aralkyl type phenol resin represented by formula (4) above instead of the trisphenol type phenol resin represented by formula (2) above.

### (Thermal conductive sheet)

The thermal conductive sheet according to the second embodiment includes the resin composition according to the second embodiment described above. Therefore, the thermal conductive sheet according to the second embodiment also has improved heat dissipation properties.

The resin composition, the method for producing the resin composition, and the thermal conductive sheet according to this embodiment are configured above and thus have the following advantages.

That is, the resin composition according to the present invention includes an epoxy resin, a curing agent, and an inorganic filler, the inorganic filler being dispersed in the epoxy resin, wherein the inorganic filler includes two or more different inorganic particles including a whisker-like filler.

The method for producing a resin composition according to the present invention includes a kneading step of kneading raw materials including an epoxy resin, a curing agent, and an inorganic filler to prepare a resin composition in which the inorganic filler is dispersed, wherein the epoxy resin includes a liquid epoxy resin which is in a liquid form at normal temperature, and the inorganic filler includes two or more different inorganic particles including a whisker-like filler, the method further including performing, before the kneading step, a pre-kneading step of dispersing the whisker-like filler in the liquid epoxy resin.

The thermal conductive sheet according to the present invention includes an epoxy resin, a curing agent, and an inorganic filler, the inorganic filler being dispersed in the epoxy resin, wherein the inorganic filler includes two or more different inorganic particles including a whisker-like filler.

According to the present invention, a resin composition having sufficient heat dissipation properties when it is turned into a cured product, a method for producing the resin composition, and a thermal conductive sheet including a resin layer formed of the resin composition can be provided.

The resin composition, the method for producing the resin composition, and the thermal conductive sheet according to the present invention are not limited to the configuration of the aforementioned embodiments. Further, the resin composition, the method for producing the resin composition, and the thermal conductive sheet according to the present invention are not limited to those having the aforementioned operational effects. Various modifications can be made to the resin composition, the method for producing the resin composition, and the thermal conductive sheet according to the present invention without departing from the gist of the present invention.

### EXAMPLES

Next, the present invention will be described in more detail by way of Examples and Comparative Examples. The present invention is not limited to the following examples unless exceeding the gist.

### (Example 1)

A resin composition was obtained by kneading a solid epoxy resin, a liquid epoxy resin, a curing agent, a curing accelerator, a whisker-like filler, and the other inorganic particles listed below.
- Solid epoxy resin: Epoxy resin of formula (1') below (YSLV-80DE, manufactured by NIPPON STEEL Chemical & Material Co., Ltd.)
- Liquid epoxy resin: JER (registered trademark) 828 (manufactured by Mitsubishi Chemical Holdings Corporation)
- Curing agent: Phenol resin of formula (2) below (TrisP-PHBA-S, manufactured by Honshu Chemical Industry Co., Ltd.)
- Curing accelerator: Tetraphenylphosphonium tetraphenylborate (TPP-K (registered trademark), manufactured by Hokko Chemical Industry Co., Ltd.)
- Whisker-like filler: Aluminum nitride whisker (AIN whisker) manufactured by U-MAP Co., Ltd.)
- Other inorganic particles: Boron nitride filler (BN filler)

The epoxy resins and the curing agents were included in the resin composition at an equivalent ratio of 1:1. The curing accelerator was included in the resin composition in an amount of 0.01 parts by mass based on 100 parts by mass of the total of the epoxy resin and the curing agent. Further, the inorganic filler was included in the resin composition so that the content ratio of the inorganic filler was 59.0 parts by volume when a solid content of the cured product of the resin composition after the resin composition was cured was 100 parts by volume. In Example 1, the proportion of the BN filler was 58.95 parts by volume and the proportion of the AIN whisker was 0.05 parts by volume, in 59.0 parts by volume of the inorganic filler. Further, 1 part by volume of the AIN whisker was dispersed in 25 parts by volume of JER (registered trademark) 828.

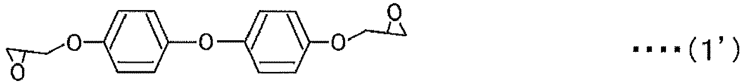

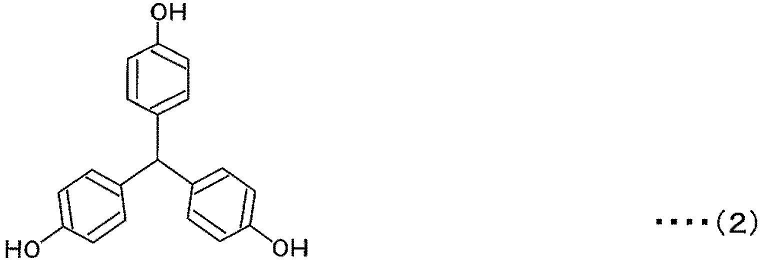

### (Example 2)

A resin composition was obtained in the same manner as Example 1 except that the proportion of the BN filler was 58.9 parts by volume and the proportion of the AIN whisker was 0.10 parts by volume in 59.0 parts by volume of the inorganic filler.

### (Example 3)

A resin composition was obtained in the same manner as Example 1 except that the proportion of the BN filler was 58.8 parts by volume and the proportion of the AIN whisker was 0.20 parts by volume in 59.0 parts by volume of the inorganic filler.

### (Example 4)

A resin composition was obtained in the same manner as Example 2 except that a bisphenol A type epoxy resin (JER (registered trademark) 1009 (manufactured by Mitsubishi Chemical Holdings Corporation)) was used instead of the solid epoxy resin of formula (1') above, and a novolac type phenol resin was used instead of the curing agent for the epoxy resin of formula (2) above.

### (Example 5)

A resin composition was obtained in the same manner as Example 4 except that the proportion of the BN filler was 58.8 parts by volume and the proportion of the AIN whisker was 0.20 parts by volume in 59.0 parts by volume of the inorganic filler.

### (Example 6)

A resin composition was obtained in the same manner as Example 1 except that an epoxy resin of formula (3) below was used instead of the epoxy resin of formula (1') above and a phenol resin of formula (4) below was used instead of the curing agent for the epoxy resin of formula (2) above.

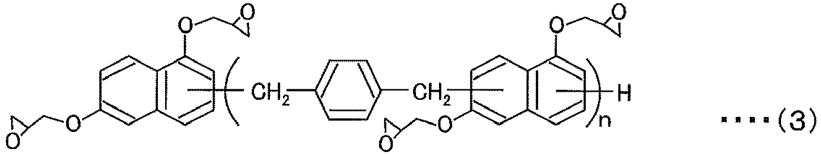

Where n denotes a positive integer.

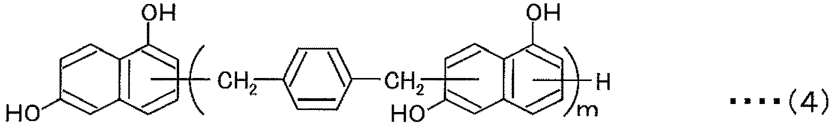

Where m denotes a positive integer.

### (Example 7)

A resin composition was obtained in the same manner as Example 6 except that the proportion of the BN filler was 58.9 parts by volume and the proportion of the AIN whisker was 0.10 parts by volume in 59.0 parts by volume of the inorganic filler.

### (Example 8)

A resin composition was obtained in the same manner as Example 6 except that the proportion of the BN filler was 58.8 parts by volume and the proportion of the AIN whisker was 0.20 parts by volume in 59.0 parts by volume of the inorganic filler.

### (Comparative Example 1)

A resin composition was obtained in the same manner as Example 1 except that the proportion of the BN filler was 59.0 parts by volume and the proportion of the AIN whisker was 0 parts by volume in 59.0 parts by volume of the inorganic filler.

### (Comparative Example 2)

A resin composition was obtained in the same manner as Example 4 except that the proportion of the BN filler was 59.0 parts by volume and the proportion of the AIN whisker was 0 parts by volume in 59.0 parts by volume of the inorganic filler.

### (Comparative Example 3)

A resin composition was obtained in the same manner as Example 6 except that the proportion of the BN filler was 59.0 parts by volume and the proportion of the AIN whisker was 0 parts by volume in 59.0 parts by volume of the inorganic filler.

### <Peel strength>

The resin composition according to each of the aforementioned examples was coated on one surface of an electrolytic copper foil (thickness: 35 pm) to prepare two sheets each having a resin layer (thickness: 145 µm). Next, the resin layers of the two sheets were adhered to each other by hot pressing (3.0 MPa, 120 °C, 20 min), and a copper foil was peeled off from a back surface of the sheet. Then, an aluminum plate was placed on the surface from which the copper foil was peeled off to transfer the sheet on the aluminum plate by hot pressing (2.0 MPa, 120 °C, 20 min) and a copper foil was peeled off from another surface of the sheet to obtain a semi-cured sheet. Next, an adherend (1oz copper foil) was layered on the semi-cured sheet and subjected to hot pressing (2.0 MPa, 180 °C, 120 min) to cause the resin layer to be sufficiently cured, while causing the resin layer and the adherend to be integrated with each other. Thereafter, the cured product was cut into a size of 20 mm × 100 mm, and the adherend of the cut piece was processed (etched) to have a width of 10 mm to prepare a test piece for peeling test. A 90° peel test was performed for the test piece at a peeling rate of 50 mm/min and the adhesion strength between the adherend and the resin layer was evaluated by the peel strength.

### <Thermal conductivity>

In the measurement of thermal conductivity, an insulating heat dissipation sheet was prepared in the following manner. First, the resin composition (thickness: approx. 200 pm) according to each of the aforementioned examples was coated on a copper foil (area: 2,500 cm²) as a base material. A coater method, namely, roll-to-roll processing, was adopted as a coating method with dry conditions at 120 °C for 5 minutes. In this way, resin sheets were prepared for the resin compositions according to the aforementioned examples. Next, an insulating heat dissipation sheet including a metal foil (insulation layer thickness: 0.22 mm with a fluctuation of plus or minus 0.04 mm) was prepared for each of the resin sheets according to the aforementioned examples by superposing two pieces of the resin sheets of the same type so as to allow the surfaces that are not in contact with the base material to face each other, and hot pressing at a temperature at 100 °C and a pressure of 8 MPa for period of 20 minutes.

A copper foil which is a metal foil was removed from each surface of the insulating heat dissipation sheet by etching, and a resin cured product having a rectangular shape with each side of 10 mm with a fluctuation of plus or minus 0.5 mm was cut out from the insulating head dissipation sheet. Then, an antireflection agent (manufactured by Fine Chemical Japan Co., Ltd., Product No.: FC-153) was coated on both surfaces of the resin cured product thus cut out to prepare a thermal diffusivity measurement sample. The value of the thermal conductivity was calculated by multiplying the value of the thermal diffusivity measured for the thermal diffusivity measurement sample using a xenon flash analyzer (manufactured by NETZSCH, LFA-447 type) by the value of the specific heat measured by a heat flux DSC in accordance with JIS 7123:1987 and the value of the density measured by a water substitution method in accordance with JIS K 7122:1999. The value of the thermal diffusivity was obtained by arithmetically averaging the values of the thermal diffusivity measured for three measurement samples. The thermal diffusivity was measured at five points of each measurement sample, and the value obtained by arithmetically averaging the values at three points excluding the maximum value and the minimum value was taken as the measurement value of each of the measurement samples.

### <Withstand voltage>

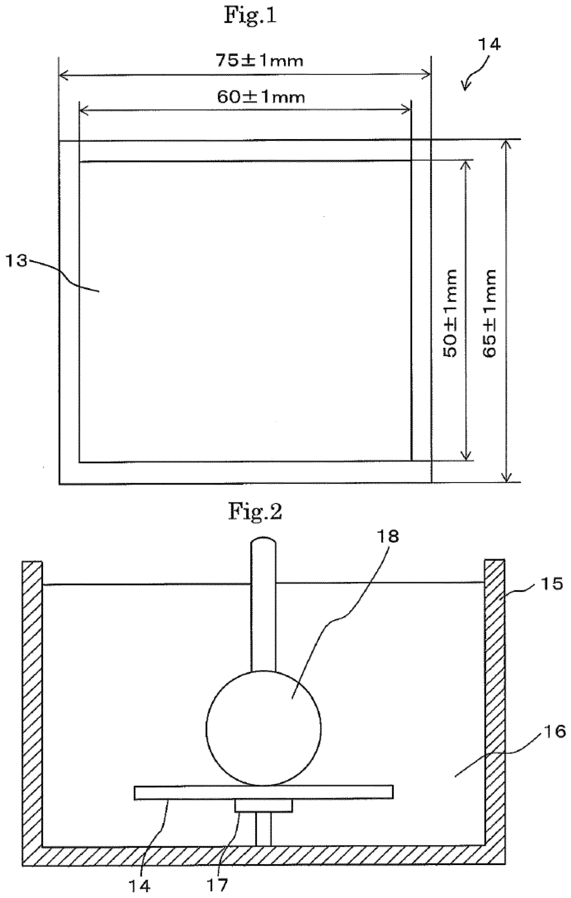

The withstand voltage was measured by an insulation breakdown apparatus that can apply a voltage at a frequency of 50 or 60 Hz with a crest factor between 1.34 to 1.48 and outputs a maximum voltage of AC10kV (effective value). Details of the measurement method will be described with reference to Fig. 1 and Fig. 2. A withstand voltage measurement sample 14 shown in Fig. 1 was obtained by peeling a copper foil 13 from one side of the insulating heat dissipation sheet of 75 mm with a fluctuation of plus or minus 1 mm × 65 mm with a fluctuation of plus or minus 1 mm, layering an aluminum plate on the peeled surface and heating the same to integrate the aluminum plate with the insulating heat dissipation sheet, and further heating and thereby completely curing the layered body. The insulating heat dissipation sheets respectively including the resin compositions according to the examples were prepared. As shown in Fig. 2, the withstand voltage measurement sample 14 was disposed on a brass disc electrode 17 (Φ: 40 mm) with the aluminum plate side facing downward in insulating oil 16 (JIS C2320:1999) in an oil tank 15. A brass spherical electrode 18 (Φ: 15 mm, weight: 50 g) was disposed on the withstand voltage measurement sample 14 so as to be in contact with a substantially center part of the withstand voltage measurement sample 14. While keeping the insulating oil 16 at 20 °C with a fluctuation of plus or minus 10 degrees, a voltage of AC3.0kV (effective value) was applied to the withstand voltage measurement sample 14 for one minute. In the case where no insulation breakdown was caused, the voltage was rapidly increased by AC0.5kV (effective value) and applied for one minute, followed by increasing the voltage in a stepwise manner with a step of 0.5kV (effective value) (0.5kV

(effective value) per step applied for one minute) until insulation breakdown occurred. Herein, the cutoff current was set at 10 mA as a criterion for determining the occurrence of the insulation breakdown. Further, the applied voltage lower by 0.5 kV (effective value) than the voltage that caused the insulation breakdown was taken as the withstand voltage.

The measured results of the peel strength, the thermal conductivity, and the withstand voltage by the aforementioned methods are shown in Table 1 below. The peel strength in the table below shows an average value of values obtained in the tests performed for six times. Comparative Example 1 corresponds to Examples 1 to 3, Comparative Example 2 corresponds to Examples 4 and 5, and Comparative Example 3 corresponds to Examples 6 to 8, respectively.

**Table 1**

| | Solid epoxy resin | Curing agent | Inorganic filler | | Thermal conductivity | Peel strength | Withstand voltage |
|---|---|---|---|---|---|---|---|
| | | | BN | AIN whisker | [W/(m·K)] | [N/cm] | [kV] |
| Ex. 1 | Formula (1') | Formula (2) | 58.95 | 0.05 | 14 | 4 | 2 |
| Ex. 2 | Formula (1') | Formula (2) | 58.9 | 0.1 | 17 | 4 | 1 |
| Ex. 3 | Formula (1') | Formula (2) | 58.8 | 0.2 | 16 | 4 | 1 |
| Ex. 4 | Bisphenol A type | Novolac type | 58.9 | 0.1 | 11 | 2 | 6 |
| Ex. 5 | Bisphenol A type | Novolac type | 58.8 | 0.2 | 11 | 2 | 6 |
| Ex. 6 | Formula (3) | Formula (4) | 58.95 | 0.05 | 15 | 2.5 | 6 |
| Ex. 7 | Formula (3) | Formula (4) | 58.9 | 0.1 | 14 | 2.5 | 3 |
| Ex. 8 | Formula (3) | Formula (4) | 58.8 | 0.2 | 13 | 2.5 | 6 |
| C.Ex. 1 | Formula (1') | Formula (2) | 59 | 0 | 10 | 4 | - |
| C.Ex. 2 | Bisphenol A type | Novolac type | 59 | 0 | 10 | 2 | 6 |
| C.Ex. 3 | Formula (3) | Formula (4) | 59 | 0 | 12 | 2.5 | 6 |

As is evident from Table 1, the cured products of the resin compositions according to Examples 1 to 3 are greatly improved in thermal conductivity, that is, greatly improved in heat dissipation properties as compared with the resin composition according to Comparative Example 1. Also as is evident from Table 1, the cured products of the resin compositions according to Examples 4 and 5 are improved in thermal conductivity as compared with the resin composition according to Comparative Example 2, and the cured products of the resin compositions according to Examples 6 to 8 are improved in thermal conductivity as compared with the resin composition according to Comparative Example 3. That is, it is evident that the resin compositions according to Examples 4 to 8 are also improved in heat dissipation properties. Further, it is evident that the resin compositions according to Examples 1 to 3 and the resin compositions according to Examples 6 to 8 are improved in peel strength, that is, improved in peeling resistance as compared with the resin compositions according to Examples 4 and 5. It is evident that, in particular, the resin compositions according to Examples 1 to 3, that is, the resin compositions using the solid epoxy resin of formula (1') above and the phenol resin of formula (2) above are significantly improved in peel strength. Also, it is evident that the resin compositions according to Examples 4 and 5 and the resin compositions according to Examples 6 to 8 are significantly improved in withstand voltage as compared with the resin compositions according to Examples 1 to 3. As is evident from these results, the resin composition using the solid epoxy resin of formula (1') above and the phenol resin of formula (2) above can achieve improvement in heat dissipation properties and peeling resistance, and the resin composition using the solid epoxy resin of formula (3) above and the phenol resin of formula (4) above can achieve improvement in heat dissipation properties and withstand voltage.

Next, an investigation was made on the influence of the aluminum nitride whisker on the heat dissipation properties of the cured products of the resin compositions by adjusting the particle sizes of aluminum nitride whisker (AIN) to 4 patterns (Test Examples 1 to 4) as shown in Table 2 below using an ultrasonic homogenizer (manufactured by Emerson Japan, Ltd.). The resin compositions according to Test Examples 1 to 4 were obtained in the same manner as Example 7 described above. The measurement results of the thermal conductivity for the cured products of the resin compositions according to Test Examples 1 to 4 are shown in Table 2 below. The thermal conductivity was measured in the method described above. The particle size distribution of the aluminum nitride whisker was measured by a wet method using a laser diffraction-scattering type particle size measuring apparatus (LS 13 320 manufactured by BECKMANCOULTER). The measurement was performed in the following conditions.
- Dispersion media: MEK (methyl ethyl ketone, refractive index: 1.38)
- Measurement sample: Whisker-like filler
- PID (Polarization Intensity Differential Scattering) Concentration: 42%
- Pump speed: 68%
- Relative humidity: 6%
- Run time (Circulation time for dispersion media with the measurement sample dispersed therein): 94 sec.
- Software: Dedicated software ver. 6.03
- Firmware: Dedicated firmware ver. 2.02
- Measurement range: 0.04 to 2000 pm

In the above measurement, a pretreatment was performed to cause the AIN whisker to be dispersed in the MEK by adding a composition prepared by adding the AIN whisker to the liquid epoxy resin in the MEK as a dispersion media, followed by subjecting the MEK to ultrasonic treatment for 15 to 20 minutes.

**Table 2**

| | | Test Ex. 1 | Test Ex. 2 | Test Ex. 3 | Test Ex. 4 |
|---|---|---|---|---|---|
| Fillertype | | AIN | AIN | AIN | AIN |
| Accumulated particle size distribution | D10 | 1.166 | 1.221 | 1.138 | 1.558 |
| | D50 | 4.247 | 4.297 | 4.184 | 4.852 |
| | D90 | 18.37 | 25 | 25.43 | 26.61 |
| Thermal conductivity [W/(m·K)] | | 12.9 | 13.7 | 13.7 | 13.9 |

As is evident from Table 2, the resin compositions according to Test Examples 2 to 4 have higher values of the thermal conductivity than the resin composition according to Test Example 1. Also as is evident from

Table 2, a D90 of the aluminum nitride whisker of each of the resin compositions according to Test Examples 2 to 4 is 25 pm or more, whereas a D90 of the aluminum nitride whisker of the resin composition according to Test Example 1 is 18.37 pm. It is evident from the above results that the resin composition including the aluminum nitride whisker, a D90 of which is 25pm or more, shows a higher thermal conductivity, that is, shows higher heat dissipation properties.

Next, an investigation was made on the influence of the type of the whisker-like filler on the thermal conductivity. As the whisker-like filler, alumina whisker (AIO) having a D90 adjusted to 25 pm or more and calcium metasilicate whisker (CM) having a D90 adjusted to 25 pm or more by an ultrasonic homogenizer (manufactured by Emerson Japan, Ltd.) were used. The resin compositions according to Test Examples 5 to 8 as shown in Table 3 below were obtained using such whisker-like fillers. The resin compositions according to Test Examples 5 to 8 were obtained in the same manner as Example 7 described above. The measurement results of the thermal conductivity for the cured products of the resin compositions according to Test Examples 5 to 8 are shown in Table 3 below. The thermal conductivity was measured by the method described above. The particle size distribution of each of the whisker-like fillers was measured by the method described above. No pretreatment was performed in the measurement of the particle size distribution of each of the whisker-like fillers.

**Table 3**

| | | Test Ex. 5 | Test Ex. 6 | Test Ex. 7 | Test Ex. 8 |
|---|---|---|---|---|---|
| Fillertype | | Alumina | CM | CM | CM |
| Accumulated particle size distribution | D10 | 1.953 | 0.206 | 0.205 | 0.206 |
| | D50 | 6.176 | 4.581 | 4.872 | 4.783 |
| | D90 | 25.69 | 25.97 | 27.98 | 29.41 |
| Thermal conductivity [W/(m·K)] | | 13.9 | 13.3 | 14.2 | 13.8 |

As is evident from Table 3, the resin compositions according to Test Examples 5 to 8 each have a high thermal conductivity, specifically 13 W/(m · K) or more. That is, it is evident that a resin composition having higher heat dissipation properties can be obtained by using the whisker-like filler having a D90 of 25 pm or more.

## Claims

1. A resin composition comprising an epoxy resin, a curing agent, and an inorganic filler, the inorganic filler being dispersed in the epoxy resin, wherein
the inorganic filler comprises two or more different inorganic particles including a whisker-like filler.

2. The resin composition according to claim 1, wherein
the epoxy resin comprises a diphenyl ether type epoxy resin represented by formula (1) below, and
the curing agent comprises a trisphenol type phenol resin represented by formula (2) below.

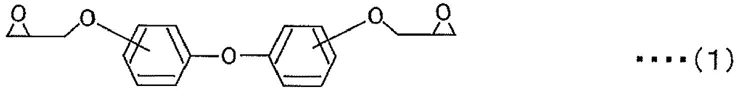

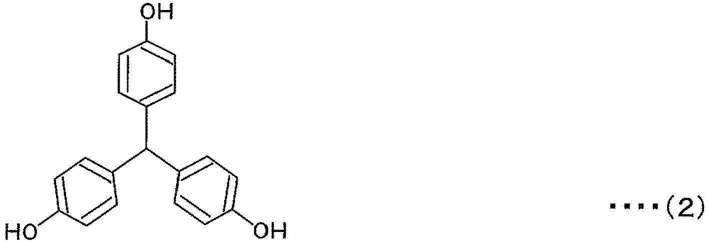

3. The resin composition according to claim 1, wherein
the epoxy resin comprises a naphthalene diol aralkyl type epoxy resin represented by formula (3) below, and
the curing agent comprises a naphthalene diol aralkyl type phenol resin represented by formula (4) below, where n and m denote positive integers.

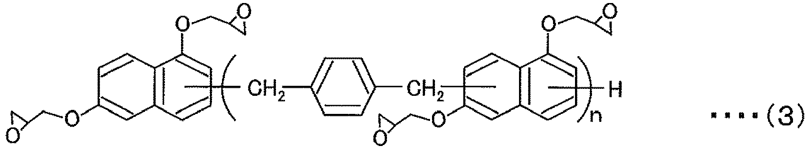

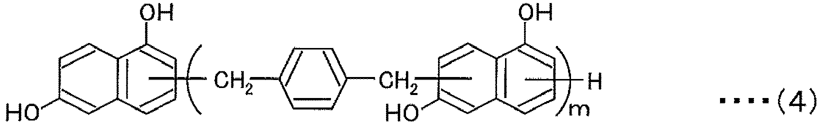

4. The resin composition according to claim 2 or 3, wherein
the epoxy resin further comprises a liquid epoxy resin which is in a liquid form at normal temperature.

5. The resin composition according to any one of claims 1 to 4, wherein
the whisker-like filler is aluminum nitride whisker.

6. The resin composition according to any one of claims 1 to 5, wherein
the inorganic filler further comprises boron nitride particles.

7. A method for producing a resin composition comprising a kneading step of kneading a raw material comprising an epoxy resin, a curing agent, and an inorganic filler to prepare a resin composition in which the inorganic filler is dispersed, wherein
the epoxy resin comprises a liquid epoxy resin which is in a liquid form at normal temperature, and
the inorganic filler comprises two or more different inorganic particles including a whisker-like filler,
the method further comprising performing, before the kneading step, a pre-kneading step of dispersing the whisker-like filler in the liquid epoxy resin.

8. The method for producing a resin composition according to claim 7, wherein
the epoxy resin comprises a diphenyl ether type epoxy resin represented by formula (1) below, and
the curing agent comprises a trisphenol type phenol resin represented by formula (2) below.

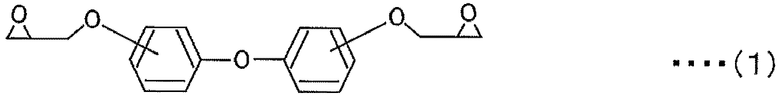

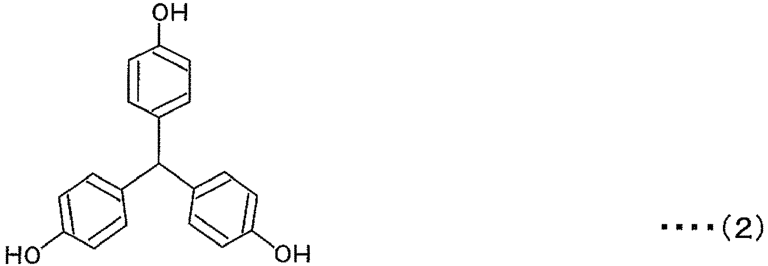

9. The method for producing a resin composition according to claim 7, wherein
the epoxy resin comprises a naphthalene diol aralkyl type epoxy resin represented by formula (3) below, and
the curing agent comprises a naphthalene diol aralkyl type phenol resin represented by formula (4) below, where n and m denote positive integers.

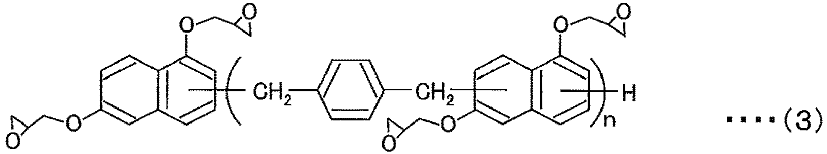

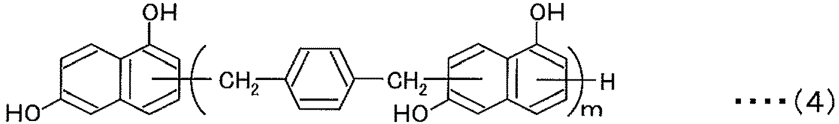

10. The method for producing a resin composition according to any one of claims 7 to 10, wherein
the whisker-like filler is aluminum nitride whisker.

11. The method for producing a resin composition according to any one of claims 7 to 10, wherein
the inorganic filler further comprises boron nitride particles.

12. The method for producing a resin composition according to claim 11, wherein
the boron nitride particles comprise aggregated particles in which a plurality of primary particles are aggregated.

13. A thermal conductive sheet comprising an epoxy resin, a curing agent, and an inorganic filler, the inorganic filler being dispersed in the epoxy resin, wherein
the inorganic filler comprises two or more different inorganic particles including a whisker-like filler.

14. The thermal conductive sheet according to claim 13, wherein
the epoxy resin comprises a diphenyl ether type epoxy resin represented by formula (1) below, and
the curing agent comprises a trisphenol type phenol resin represented by formula (2) below.

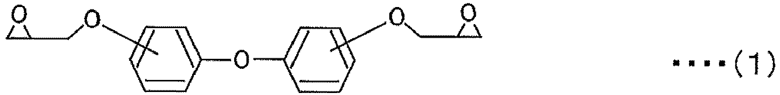

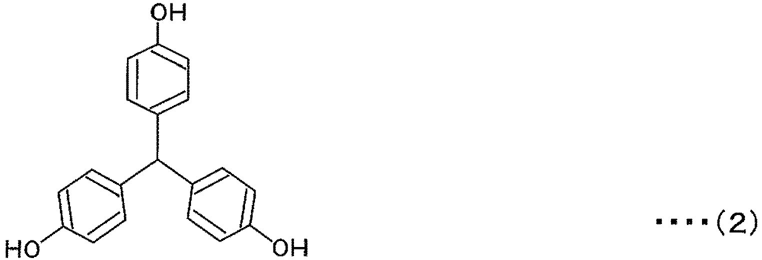

15. The thermal conductive sheet according to claim 13, wherein
the epoxy resin comprises a naphthalene diol aralkyl type epoxy resin represented by formula (3) below, and
the curing agent comprises a naphthalene diol aralkyl type phenol resin represented by formula (4) below, where n and m denote positive integers.

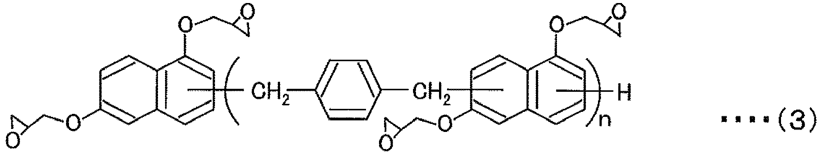

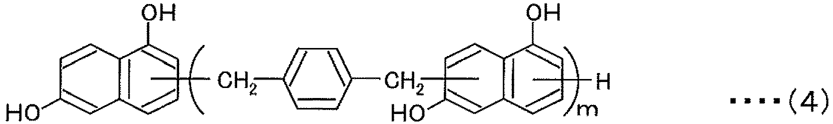

16. The thermal conductive sheet according to claim 14 or 15, wherein
the epoxy resin further comprises a liquid epoxy resin which is in a liquid form at normal temperature.

17. The thermal conductive sheet according to any one of claims 13 to 16, wherein
the whisker-like filler is aluminum nitride whisker.

18. The resin composition according to any one of claims 13 to 17, wherein
the inorganic filler further comprises boron nitride particles.
